# EUROPEAN PATENT APPLICATION

(11) **EP 1 785 826 A2**
(43) Date of publication of application: **16.05.2007**
(21) Application number: 06123373.0
(22) Date of filing: 02.11.2006
(51) Int. Cl.: G06F 3/048

(54) **Apparatus and method for displaying web page in mobile communication terminal**

(30) Priority: 11.11.2005 KR 20050107806
(71) Applicant: Samsung Electronics Co., Ltd., Suwon-si, Gyeonggi-Do (KR)
(72) Inventor: SHIN, Tai-Ho, Seoul (KR)
(74) Representative: Zimmer, Franz-Josef

(57) **Abstract**

An apparatus and method for displaying a Web page of a wireless Internet in a mobile communication terminal. In the method, the Web page is divided into a plurality of sub-sections and the sub-sections of the Web page are mapped in a one-to-one correspondence with keybuttons of the mobile communication terminal. When one of the keybuttons is pressed, the sub-section of the Web page mapped to the pressed keybutton is detected. The detected sub-section of the Web page is displayed.

## Description

The present invention relates generally to an apparatus and method for displaying a wireless Internet Web page in a mobile communication terminal, and in particular, to an apparatus and method for displaying a Web page in a mobile communication terminal, which divides the Web page into a plurality of sub-sections and maps the sub-section of the Web page in one-to-one correspondence with keybuttons of the mobile communication terminal, thereby enabling a user to scroll to display a desired sub-section from among the sub-sections of the Web page rapidly using a simple key manipulation.

Mobile communication terminals are easy to carry and thus their use is rapidly increasing. Accordingly, communication service providers and communication terminal manufacturers are competitively developing mobile communication terminals with more convenient functions in order to attract more users.

For example, the mobile communication terminals provide a variety of additional functions/services such as a phone book function, a game function, a scheduler function, a short message service, a multimedia message service, a cell broadcasting service, an Internet service, an e-mail service, a morning call function, an MP3 (MPEG Layer 3) function, and a digital camera function.

Recently, typical mobile communication terminals have begun to provide means for receiving an Internet service. Accordingly, the use of a wireless Internet accessed via the mobile communication terminals is gradually increasing.

Due to their size, it is difficult to display conventional Internet Web pages (that are designed for display on large screens such as a seventeen-inch display screen) on small display screens of typical mobile communication terminals (e.g., a 2 ½" display). Accordingly, two methods are typically used to display a Web page of the wireless Internet on the display screens of typical mobile communication terminals. In the first method, the Web page is reduced in size according to the display screen size of the mobile communication terminal. In the second method, only a section of the large Web page is displayed in the mobile communication terminal and navigation keybuttons are used to scroll the large Web page up, down, left, and/or right so as to view the entire section of the large Web page.

However, the first method may distort information in the large Web page. Also, the second method is inconvenient in that the navigation keybuttons must be frequently manipulated to selectively display a desired section of the large Web page.

The present invention has been designed to substantially solve at least the above problems and/or disadvantages and to provide at least the advantages below. Accordingly, the object of the present invention is to provide an apparatus and method for displaying a Web page of a wireless Internet in a mobile communication terminal, which makes it possible for a user to rapidly scroll to display a desired subsection from among a plurality of sub-sections of the Web page.

This object is solved by the subject matter of the independent claims.

Preferred embodiments are defined in the dependent claims.

An aspect of the present invention is to provide an apparatus and method for displaying a Web page of a wireless Internet in a mobile communication terminal, which makes it possible for a user to rapidly scroll to display a desired sub-section from among a plurality of sub-sections of the Web page using keybuttons that are mapped in a one-to-one correspondence with each of the plurality of sub-sections of the Web page.

According to an aspect of the present invention, in a method for displaying a Web page of a wireless Internet in a mobile communication terminal, the Web page is divided into a plurality of sub-sections and the sub-sections of the Web page are mapped in one-to-one correspondence with keybuttons of the mobile communication terminal. When one of the keybuttons is pressed (or otherwise selected), the sub-section of the Web page mapped to the pressed keybutton is detected. Thereafter, the sub-section of the Web page corresponding to the detected keybutton is displayed.

According to another aspect of the present invention, an apparatus for displaying a Web page of a wireless Internet in a mobile communication terminal includes a keypad, a controller, and a display unit. The keypad includes a plurality of keybuttons. The controller divides the Web page into a plurality of sub-sections, maps the sub-sections of the Web page in a one-to-one correspondence with keybuttons of the mobile communication terminal, and outputs one of the Web page sub-sections mapped to the keybutton. The display unit displays the Web page sub-section outputted from the controller.

The present invention will become more apparent from the following detailed description when taken in conjunction with the accompanying drawings in which:
FIG. 1 is a block diagram of a mobile communication terminal according to the present invention;
FIG. 2 is a flowchart illustrating a procedure for dividing a Web page into a plurality of sub-sections and mapping the sub-sections to keybuttons of the mobile communication terminal, according to the present invention;
FIG. 3 is a flowchart illustrating a procedure for displaying a Web page in the mobile communication terminal, according to the present invention; and
FIG. 4 is a diagram illustrating a display screen of a mobile communication terminal where keybuttons are mapped in a one-to-one correspondence with the sub-sections of the Web page, according to the present invention.

Preferred embodiments of the present invention will be described herein below with reference to the accompanying drawings. In the following description, well-known functions or constructions are not described in detail because they would obscure the present invention in unnecessary detail.

The present invention is intended to provide a technique for dividing a Web page into a plurality of sub-sections in a mobile communication terminal and mapping the sub-sections of the Web page in a one-to-one correspondence with keybuttons of the mobile communication terminal, thereby making it possible for a user to scroll to display a desired sub-section from among the sub-sections of the Web page rapidly by simple key manipulation.

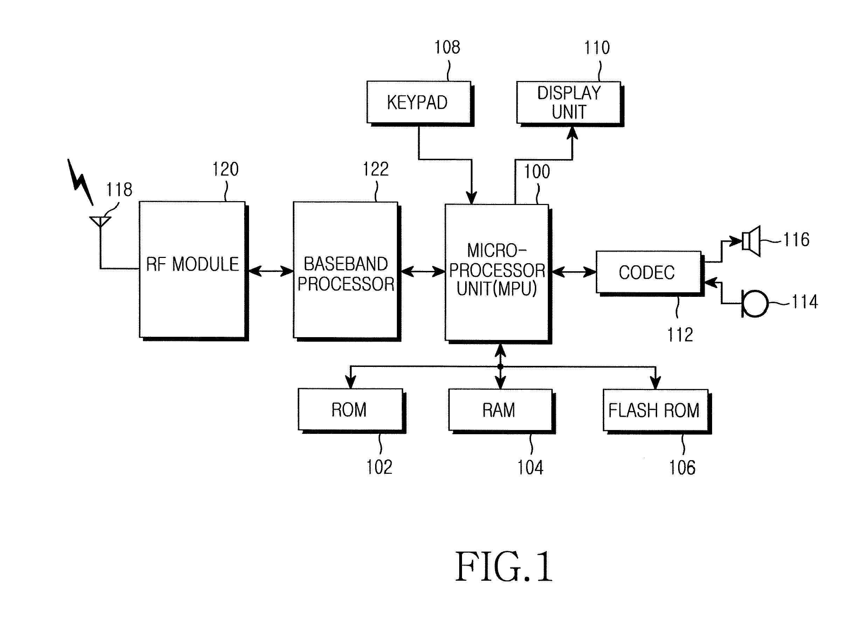

FIG. 1 is a block diagram of a mobile communication terminal according to the present invention. A mobile communication terminal described below includes a cellular phone, a personal communication system (PCS) terminal, a personal data assistant (PDA), and/or an international mobile communication 2000 (IMT-2000) terminal. The following descriptions will be made with a general structure of the above terminals.

Referring to FIG. 1, the mobile communication terminal includes a controller (e.g., an MPU) 100, a read only memory (ROM) 102, a random access memory (RAM) 104, a flash ROM 106, a keypad 108, a display unit 110, a coder-decoder (CODEC) 112, a microphone 114, a speaker 116, an antenna 118, a radio frequency (RF) module 120, and a baseband processor 122.

The controller 100 controls an overall operation of the mobile communication terminal. For example, the controller 100 processes and controls voice communication and data communication. In addition to the general functions, the controller 100 performs a function of moving to a predetermined sub-section of the Web page, which is mapped to an input keybutton, and displaying the predetermined sub-section of the Web page. A detailed description about the general control operation of the controller 100 will be omitted for conciseness.

The ROM 102 may stores a variety of reference data and microcode of one or more programs for the process and control operation of the controller 100. According to the present invention, the ROM 102 may store one or more program for dividing a Web page into a plurality of sub-sections and mapping the sub-sections in a one-to-one correspondence with keybuttons and one or more programs for moving to the sub-section of the Web page corresponding to the keybutton inputted and displaying the corresponding sub-section of the Web page. The RAM 104 is a working memory of the controller 100, which may also store temporary data that is generated during the execution of various programs. The flash ROM 106 may store a variety of updatable data such as a phone book, an outgoing message, and an incoming message picture files, movies, etc. According to the present invention, the flash ROM 106 stores data about the sub-sections of the Web page, which are mapped in a one-to-one correspondence with the keybuttons.

The keypad 108 includes numeric keybuttons of digits 0-9 and a plurality of function keybuttons, such as a Menu keybutton, a Cancel (delete) keybutton, a Confirmation keybutton, a Talk keybutton, an End keybutton, an Internet connection keybutton, Navigation keybuttons (▲/▼/◄/►), and/or a character input keybutton. The keypad 108 provides the controller 100 with key input data that corresponds to a keybutton pressed by a user.

The display unit 110 displays status information generated during operations, numerals and characters, moving pictures and still pictures, and so on. The display unit 110A may be a color liquid crystal display (LCD). According to the present invention, the display unit 110 displays a Web page divided by the controller 100.

The CODEC 112 connected to the controller 100, and the speaker 116, and the microphone 114 connected to the CODEC 112 constitute an audio input/output block that is used for a telephone communication and voice recording. The CODEC 112 converts PCM (Pulse Code Modulation) data received from the controller 100 into analog audio signals and outputs the analog audio signals to the speaker 116. Also, the CODEC 112 converts audio signals received through the microphone 114 into PCM data and provides the PCM data to the controller 100.

The RF module 120 down-converts an RF signal received through the antenna 118 and provides the resulting baseband signal to a baseband processor 122. Also, the RF module 120 up-converts a baseband signal provided from the baseband processor 122 and transmits the resulting RF signal through the antenna 118. The baseband processor 122 processes the baseband signals that are exchanged between the RF module 120 and the controller 100. For example, in the case of data transmission, the baseband processor 122 performs channel coding and spreading on data to be transmitted. In the case of data reception, the baseband processor 122 performs despreading and channel decoding on received data.

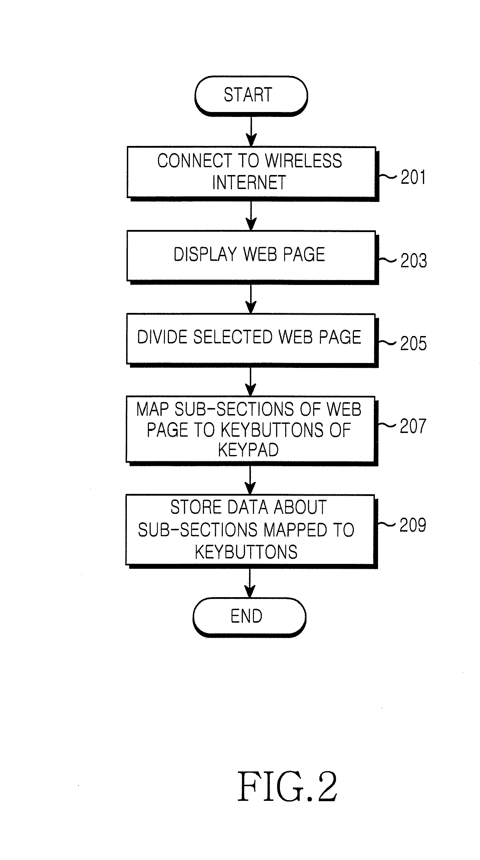

FIG. 2 is a flowchart illustrating a procedure for dividing a Web page into a plurality of sub-sections and mapping the sub-sections to the keybuttons of the mobile communication terminal according to the present invention.

Referring to FIG. 2, in step 201, the controller 100 connects to a wireless Internet. In step 203, the controller 100 displays a Web page of the wireless Internet on the display unit 110.

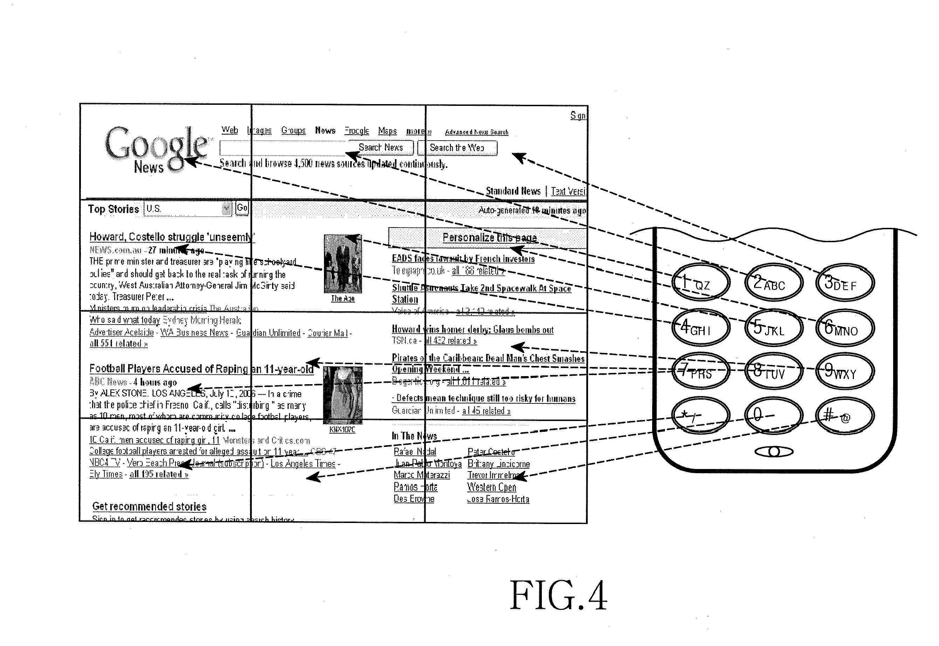

In step 205, the controller 100 divides the displayed Web page into a plurality of sub-sections each having a predetermined size. In step 207, the controller 100 maps the sub-sections of the Web page in a one-to-one correspondence with a 3x4 matrix of keybuttons of the keypad 108, as illustrated in FIG. 4.

In step 209, the controller 100 stores data about the sub-sections of the Web page, which are mapped in a one-to-one correspondence with the 3×4 matrix of keybuttons.

Thereafter, the controller 100 ends the procedure.

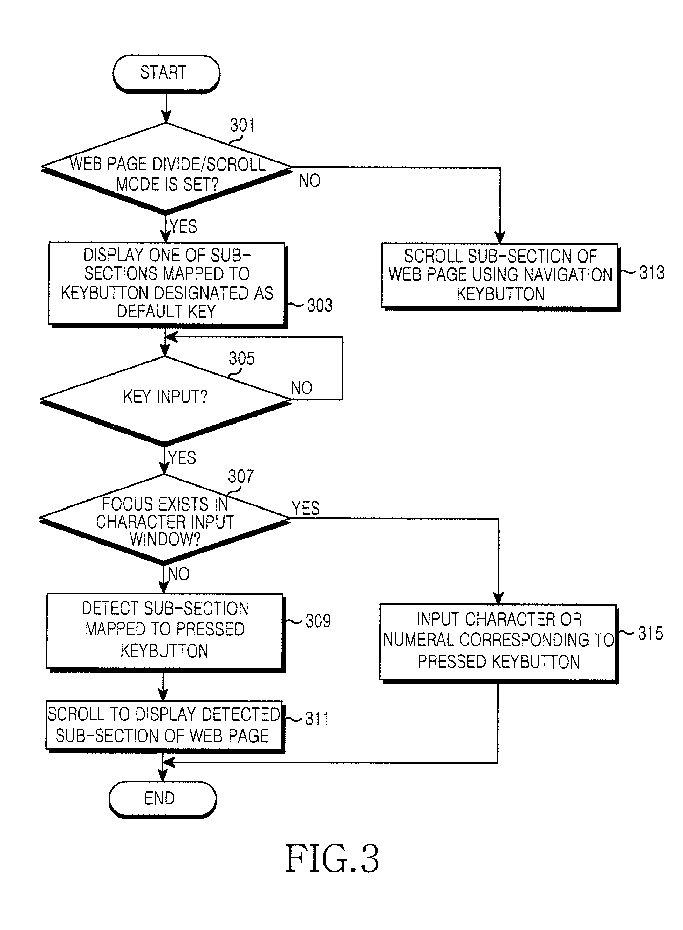

FIG. 3 is a flowchart illustrating a procedure for displaying a Web page in the mobile communication terminal according to the present invention.

Referring to FIG. 3, in step 301, the controller 100 determines whether a Web page divide/scroll mode is set. If the Web page divide/scroll mode is set, the controller 100 proceeds to step 303, and if not, the controller 100 proceeds to step 313.

In step 313, the controller 100 performs a scroll mode for scrolling the Web page in an up, down, left, right directions using navigation keybuttons or performs a mode for adjusting the size of the Web page to the size of the display unit 110.

In step 303, the controller 100 displays the sub-section of the Web page that is mapped to the keybutton designated as a default keybutton. The default keybutton can be set and changed by a user.

In step 305, the controller 100 periodically determines whether a predetermined keybutton is pressed by a user. When a predetermined keybutton is pressed by a user, the controller 100 proceeds to step 307.

In step 307, the controller 100 determines whether a character input window exists in the displayed Web page and whether a character input focus exists in the character input window. If the character input focus exists in the character input window, the controller 100 proceeds to step 315, and if not, the controller 100 proceeds to step 309.

In step 315, the controller 100 displays a character or a numeral corresponding to the pressed keybutton on the character input window.

Thereafter, the controller 100 ends the display procedure.

In step 309, the controller 100 detects position data about the sub-section of the Web page that is mapped to the pressed keybutton.

In step 311, the controller 100 scrolls to display the detected sub-section of the Web page on the display unit 100.

Thereafter, the controller 100 ends the display procedure.

In addition, a key (e.g., a confirmation key) for determining whether the character input focus exists in the character input window may be used in the display procedure. That is, when the character input focus does not exist in the character input window, the confirmation key can be used to create the character input focus in the character input window. On the other hand, when the character input focus exists in the character input window, the confirmation key can be used to remove the character input focus from the character input window.

As described above, the present invention divides the Web page into the sub-sections in the mobile communication terminal during use of the wireless Internet, maps the sub-sections of the Web page in a one-to-one correspondence with the keybuttons, and displays a desired one of the sub-sections. Accordingly, it is possible to scroll to display a desired one among the sub-section of the Web page rapidly by simple key manipulation. Therefore, it is possible to conveniently display a Web page designed for larger screens.

While the present invention has been shown and described with reference to certain preferred embodiments thereof, it will be understood by those skilled in the art that various changes in form and details may be made therein without departing from the scope of the present invention as defined by the appended claims.

## Claims

1. A method for outputting a Web page of a wireless Internet in a mobile communication terminal, the method comprising:
dividing the Web page into a plurality of sub-sections and mapping the sub-sections of the Web page into input means of the mobile communication terminal;
detecting the corresponding sub-section of the Web page when one element of the input means is inputted.

2. The method of claim 1, wherein said input means are keybuttons and said one element of the input means is one keybutton of the keybuttons, wherein said step of detecting is performed when one of the keybuttons is pressed.

3. The method of claim 2, wherein the step of mapping comprises:
mapping the sub-sections of the Web page in a one-to-one correspondence with the keybutton.

4. The method of one of claims 1 to 3, further comprising displaying the detected sub-section of the Web page.

5. The method of one of claims 2 to 4, wherein the keybuttons include a matrix of 3x4 keybuttons.

6. The method of one of claims 2 to 5, wherein the step of dividing the Web page and mapping the sub-sections comprises:
dividing a Web page to be displayed into a plurality of sub-sections;
mapping the sub-sections of the Web page in a one-to-one correspondence with the keybuttons of a keypad of the mobile communication terminal; and
storing data about the sub-sections of the Web page and the keybuttons mapped in a one-to-one correspondence with the sub-sections.

7. The method of one of claims 4 to 6, further comprising the step of displaying a predetermined one sub-section the sub-sections of the Web page after the mapping of the sub-sections is performed.

8. The method of claim 7, wherein the predetermined sub-section is a given section of the Web page that is mapped to the keybutton designated as a default keybutton.

9. The method of claim 8, wherein the default keybutton is set and changed by a user.

10. The method of one of claims 2 to 5, further comprising:
determining a character input focus exists in a character input window, when one of the keybuttons is pressed; and
displaying the sub-section of the Web page mapped to the pressed keybutton, when no character input focus exists in the character input window.

11. The method of claim 10, further comprising inputting a character or a numeral corresponding to the pressed keybutton into the character input window, when the character input focus exists in the character input window.

12. The method of claim 10 or 11, wherein the character input focus is generated and removed using a key for managing the character input focus.

13. An apparatus for displaying a Web page of a wireless Internet in a mobile communication terminal, the apparatus comprising:
an input means including a plurality of input elements; and
a controller for dividing the Web page into a plurality of sub-sections, mapping the sub-sections of the Web page in a one-to-one correspondence with the input elements of the mobile communication terminal, and outputting one of the Web page sub-sections mapped to an input element.

14. The apparatus of claim 13, wherein said input means is a keypad and said input elements are keybuttons, wherein said keypad includes a plurality of the keybuttons.

15. The apparatus of claim 13 or 14, further comprising a display unit for displaying the Web page sub-section output from the controller.
